# EUROPEAN PATENT SPECIFICATION

(11) **EP 0 593 826 B1**
(45) Date of publication and mention of the grant of the patent: **14.04.1999**
(21) Application number: 92309696.0
(22) Date of filing: 23.10.1992
(51) Int. Cl.: B29C 65/36, B29C 65/04, G02B 5/128, G09F 13/16, E01F 9/011, E01F 15/00

(54) **Retro-reflective assembly**
Rückstrahlende Vorrichtung
Ensemble retroréfléchissant

(43) Date of publication of application: 27.04.1994
(73) Proprietor: SWINTEX LIMITED, Bury Lancashire BL9 9NX (GB)
(72) Inventor: Houghton, Harry Vincent, Egerton, Bolton BL7 9EW (GB); Wallwork, Peter, Harwood, Bolton BL2 3PB (GB); Booth, Michael Philip, Bury, BL8 1AW (GB)
(74) Representative: Low, Peter John

(56) References cited:
- EP-A- 0 200 521
- EP-A- 0 399 841
- EP-A- 0 440 410
- GB-A- 1 497 665
- US-A- 4 025 159

## Description

This invention relates to retro-reflective assemblies and particularly, but not exclusively, retro-reflective assemblies for use with road signs, road safety furniture such as traffic cones, bollards, delineators, etc., and retro-reflective assemblies that are intended to be secured to a support for example in clothing, patches for clothing, vehicle covers and the like.

Many known retro-reflective assemblies comprise a substrate coated with a reflective layer, for example of metal such as aluminium, a binder layer on the reflective layer and a plurality of optical glass beads partially embedded in the binder layer so that the beads contact the reflective layer. In an alternative construction the reflective and binder layers are combined into a single layer. The reflective layer may be a single continuous layer of aluminium or may comprise aluminium particles or platelets suspended or embodied in the binder layer. The assembly is normally completed by a transparent or translucent cover over the beads which is usually separated from the beads by a small air gap. The cover layer is secured to underlying layers, at least around the edge. This is necessary in order to prevent rain water contacting the beads, the effect of which is to impair the reflective properties of the assembly and it appears black.

One of the most convenient methods of securing the cover layer to the rest of the assembly is high frequency welding which is usually understood to mean agitation of the molecular structure of Polar materials at selected points by the use of high frequency radio energy, often in the 25 to 30 megahertz frequency bands but in particular, at 27 to 28 megahertz and more particularly, at 27.12 megahertz.

Polar materials include plasticised polyvinyl chlorides (PVC) polyurethane, certain rubbers and nylons, but is not restricted to these.

Some normally non-polar materials may be welded using high frequency techniques by the incorporation of additives.

The agitation of the molecules of suitable materials causes them to heat up and soften or melt at the selected point and two such compatible materials in contact with each other at the selected point will flow together, resulting in a permanent joint. No external heat is applied.

This is in contrast to the technique of applying heat from an external source, as in heated calender rollers and press plates. With this method welding can be effected in a plurality of locations at the same time with a single head which is not possible with, for example, ultrasonic welding. However, the major disadvantage with high frequency welding of retro-reflective assemblies is that welding must be effected where there is no metal reflective layer between the substrate and the top cover. If high frequency welding is attempted at sites where the metal reflective layer is present shorting, arcing or a minor explosion may result with possible consequent injury to the operator of the welding equipment and damage to the equipment itself or the assembly being welded. These problems are particularly acute where the high frequency welding equipment is used to cut through the assembly to form a product of the desired shape and at the same time forms a seal at the cut edges or where high power levels are applied. For this reason it has become the practice to limit or restrict the reflective layer coating on the substrate so that a non-reflective border is provided around the edge or periphery to which the cover can be welded by high frequency welding. It is impossible for this border area to have any significant retro-reflective properties. As a result the area of the assembly adjoining the points or areas which have been high frequency welded cannot achieve a high standard of retro-reflectivity of the kind stipulated by British Standard 873 on an edge to edge basis. This leads to diminution of the overall assembly's retro-reflective target value. When a retro-reflective assembly is in the form of a cylindrical sleeve, for example for use as a bollard, the area of border having no retro-reflective properties can amount to as much as 20% of the total presented sleeve surface.

As already mentioned, if water permeates between the cover and the optical glass beads the assembly "blacks out" and loses its retro-reflective properties. It is desirable, therefore, to weld the cover to the rest of the assembly not just around the edges but at other locations thereby forming "pockets" so that if the cover is torn the retro-reflective properties of the assembly are only lost in the pocket area beneath the tear and not over the whole assembly. However, it will be appreciated that formation of such pockets by high frequency welding would require that the reflective layer should not be present at or adjacent to the places where the welding for pocket formation is effected in addition to the edge of the assembly so that the retro-reflective quality of the assembly would be even lower.

Previous art to solve this has involved expensive roller and lamination equipment, possibly using engraved rollers, considerable pressure and heat and/or adhesives.

Retro-reflective patches are now commonly fixed to articles of clothing so that the wearer can be identified in the dark. They are, for example, particularly helpful in this regard for the police cyclists, and other road users who wish to ensure that motorists will notice their presence at night time. Patches of retro-reflective material usually comprise a substrate on which a metal reflective layer is deposited. A binder layer is coated on to the metal layer and optical glass beads are partially embedded in the binder layer so as to contact the metal layer. In another arrangement the metal and binder layers may be combined together in the form of a binder layer having metal particles distributed therethrough. A transparent or translucent cover layer may extend over part or all of the assembly. Often the assembly is used without a cover layer. One of the problems with these kinds of assemblies is that they cannot be secured to a support surface by high frequency welding. This is because high frequency welding at sites where there is a metal reflective layer present causes shorting, arcing or a minor explosion with possible consequent injury to the operator of the welding equipment and damage to the equipment itself and to the assembly being welded.

Two applications which disclose retroreflective assemblies are US 4,025,159 and EP 0 200 521.

EP 0 200 521 discloses a delamination-resistant cellular retro-reflective sheeting, which comprises 1) a base sheet which has a layer of retroreflective element disposed over one of its surfaces, 2) a polymeric cover film disposed in spaced relation from the layer of retro-reflective elements, and 3) a network of narrow intersecting bonds extending between said cover film and base sheet together and form a plurality of cells within which said retro-reflective elements are hermetically sealed.

US 4,025,159 discloses a cellular retro-reflective sheeting, which comprises a base layer of retro-reflective elements and a transparent cover film supported in spaced relation away from the base layer by a network of narrow intersecting bonds that form sealed cells and is given greater durability by the use of bonds that are cured in situ after being thermoformed into sealing contact between the cover film and the base layer.

The normal methods for fixing such patches to a substrate, therefore, is by means of adhesive, for example pressure sensitive adhesives or heat sensitive adhesive which enable the patch to be ironed on, or by means of stitching. Adhesives require an extra coating operation in the production of the assembly. Stitching is a relatively slow process. In addition since it involves penetration of the substrate to which the patch is to be secured it cannot always be used to fix patches to a substrate which is to be weatherproof.

The present invention has been made in order to deal with these problems.

According to the invention there is provided a retro-reflective assembly comprising a single or multi-layer substrate and a layer of at least some partially metallised and partially embedded optical glass beads characterised in that the substrate is, at any point, joined to one or more single or multi-layer structures by the use of high frequency welding techniques and at least one partially metallised optical glass bead is encapsulated or captured within the weld area or displaced from its original position as a result of the weld.

According to the invention there is also provided a method of forming a retro-reflective assembly comprising a single or multi-layer substrate and a layer of at least some partially metallised and partially embedded optical glass beads comprising the steps of providing a single or multi-layer substrate including a layer of at least some partially metallised and partially embedded optical glass beads and joining the substrate at any point to one or more single or multi-layer structures characterised in that the substrate is joined at any point to one or more single or multi-layer structures by the use of high frequency welding and at least one partially metallised optical glass bead is encapsulated or captured within the weld area or displaced from its original position as a result of the weld.

It has surprisingly been discovered that, in spite of the presence of a metal coating on the optical glass beads, high frequency welding of the assembly to another surface, such as a cover and/or a support, is possible without the resulting shorting, arcing or explosion as experienced with the prior art assemblies. This is found to be the case even when very high concentrations of metal coated glass beads are present. Thus with the invention the border having no retro-reflective properties can be eliminated. The entire area of the assembly can be retro-reflective and as a result the assembly as a whole will have a higher edge to edge performance.

Equally surprising as a discovery is that the presence of partially metallised beads in the absence of a metallised layer may actually, for some at present unknonwn reason, enhance the concentration of the high frequency energy at the selected weld point, allowing less energy or time to be used to achieve a weld.

The assembly of the invention can be welded by high frequency welding techniques to any other suitable layer for example a support surface and/or to a transparent or translucent cover which extends over the layer of partially metallised beads.

According to another aspect of the present invention there is provided a retro-reflective assembly comprising a base substrate, a layer of glass microspheres some or all of which are partially metallised or partially embedded in either the base substrate or a binder layer carried upon the base substrate; said substrate and/or binder layer being attached by means of a high frequency weld to a support.

According to another aspect of the invention there is provided a retro-reflective assembly comprising a single or multi-layer substrate containing a layer of at least some partially metallised and partially embedded optical glass beads, wherein the substrate is at any point joined to a single or multi-layer top cover by the use of high frequency welding.

According to another aspect of the invention there is provided a retro-reflective assembly comprising a base substrate, a layer of glass microspheres some or all of which are partially metallised and are partially embedded in either the base substrate or a binder layer carried on the base substrate; and a substantially transparent or translucent to light top cover which is attached by means of a high frequency welding method to the binder layer and/or the base substrate, the whole assembly being attached by means of a high frequency welding method via the top cover to a support.

According to a further aspect of the invention there is provided a retro-reflective assembly comprising a base substrate, a layer of glass microspheres some or all of which are partially metallised and are partially embedded in either the base substrate or a binder layer carried on the base substrate, said substrate and/or binder layer being attached by means of high frequency welding to a support, and a substantially transparent or translucent to light top cover attached to the support.

According to a further aspect of the invention there is provided a retro-reflective assembly comprising layers of materials that are capable of being welded together by means of high frequency radio energy not confined to but including the 27 megahertz waveband that has present, at a place where a welded join is effected, one or more partially metallised glass microbeads.

The major requirement for the invention to work satisfactorily is for the surface of the assembly and the surface that is to be secured together to be weldable by high frequency welding. Polyvinyl chloride (PVC) is a material which is very easy to weld by high frequency welding. One or more of the base substrate, optional binder layer and substantially translucent cover if present may be made of PVC.

In one embodiment of the invention the binder layer of the retro-reflective assembly is coated on a substrate for example of polyvinyl chloride. A patch of the desired size is cut from the assembly and then welded by high frequency welding in the appropriate location on to a support.

The retro-reflective assembly can be covered with a transparent or translucent cover, for example of plastics material, which may be high frequency welded to the substrate and/or the binder layer and/or a support, or the retro-reflective assembly may be used with the optical glass beads exposed. It is also possible to provide a cover over part of the assembly, for example around the edges of the assembly and which may be where the assembly is to be welded to the support.

The retro-reflective assembly may be over printed. One or more partially metallised glass microspheres may be partially or totally encapsulated at the point where welding together of layers of the assembly takes place and/or where the assembly as a whole is welded to a support.

The high frequency radio energy used may be in the 27 megahertz waveband. The retro-reflective assembly may form part of or comprise a road sign, article of clothing for human or animal safety or fashion, a fashion accessory such as a bag or backpack, a protective cover, sheet or tarpaulin, a warning tape or band, a collar, strap, belt or decorative or structural webbing, or patches or shapes attached to such items.

One or more of the layers of the retro-reflective assembly may be rigid or flexible. The substrate may be reinforced, for example by woven or non-woven textiles. The layer of partially metallised beads may include other particles and preferably covers between 5% and 75% of the substrate surface area.

It is within the scope of the invention to weld the retro-reflective assembly as defined above to another like retro-reflective assembly so as to construct a complete item such as a garment.

The partially metallised optical glass beads that are used in the invention may be formed as follows:-The beads are coated overall with a metal reflective layer such as aluminium or silver. The coated beads are partially embedded in the binder layer and then the metal coating on the exposed parts of the beads is removed, for example by etching. This technique is already known and, therefore, need not be described further.

The retro-reflective assembly can be produced in a continuous manner by applying binder and beads to substrate as it is unreeled from a supply, the assembly being divided into pieces as required. A cover can be fitted either before or after sub-division. Alternatively the assembly can be made in a discontinuous fashion with binder, beads and a cover, if required, applied to individual pieces of substrate.

The coated optical beads individually provide a very high level of retro-reflectance. Thus if the beads are spread over the assembly so as to form a substantially continuous layer an extremely high standard retro-reflective assembly is obtained. If a lower standard product is required the coated beads can be applied in a discontinuous layer, that is to say they can be spaced apart. Distributing coated beads on the binder layer in a uniform but spaced apart layer can be effected in many ways. One example is to mix the coated beads with other material which will act as a spacer. Such other material can include uncoated optical glass beads, sand, plastic particles or the like.

Preferably the layer of partially metallised beads cover more than 5% but less than 75% of the substrate surface area.

It is not essential that the coated optical glass beads be uniformly distributed over the substrate. It may be desired to have a product in which some parts are of greater retro-reflectivity than others, in which case the density of the coated beads would be greater in some parts than in others.

A further advantage of the invention is that the assembly has a high luminance in natural light, that is to say it appears white. Some prior art assemblies comprising a reflective layer of aluminium have a rather grey appearance in daylight. The importance of this is that certain retro-reflective assemblies such as sleeves for traffic cones and delineator bollards must appear white in daylight as well as having a minimum retro-reflective standard.

The top cover, where present, may be substantially transparent or translucent or it may be partially or wholly pigmented, with one or more fluorescent colours or otherwise. The top cover may alternatively or additionally be partially or wholly overprinted on either its inner or outer surface.

The binder layer can be colourless, pigmented, transparent or translucent or opaque as desired. Where appropriate the binder layer can be printed, as by silk screen printing, to provide information such as is appropriate for a road sign or hazard warning.

The present invention readily enables a cover to be welded to the rest of the assembly to form one or more cells or "pockets". The shape of the pockets is not critical to the invention; any shape or combination of shapes can be adopted. The pockets can be discrete, that is separated from each other, they can be adjacent one another or a combination of discrete and adjacent pockets can be provided. The pockets may be as large or small as desired. If the pockets created are of a small size, the welding of the edge of the assembly may be dispensed with, since the loss of retro-reflectivity of those pockets outside the first complete pockets may be minimal in effect.

In the high frequency welding of the assembly, for example to a support and/or to a cover, it is not essential that welding should only take place where there are metal coated beads. Welding can also be effected where there are no metal coated beads, provided that there is no metal reflecting layer at such locations. If desired other methods of securing the assembly to a support and/or a cover can be used in addition to high frequency welding, examples being the use of adhesive and/or ultrasonic welding. It is thought that the shape of the welding bar or strip used, or possibly the length/width relationship of the bar has an influence on the ability to weld in an area which has partially metal coated beads present.

Preferably at least one partially metallised glass microsphere may be encapsulated or captured within the weld area or may be displaced from its original position in the substrate or binder layer as a result of a weld. At the time of welding a top cover, a tear seal may be created around at least part of the periphery of the assembly enabling a resultant smaller shaped assembly to be removed from a larger sheet thereof.

When the assembly of the invention is welded the binder layer may be caused to be displaced at the point where the weld is effected. This allows the substrate to weld directly to a top cover.

The binder layer may bond at least in part to the substrate and/or cover if present as a result of the effect of the high frequency energy acting on either or both the base substrate and/or top cover.
If the binder layer is reactive to high frequency radio energy, base substrate may be joined to a cover if present via the high frequency activated binder layer, irrespective of any response to high frequency radio energy of the top cover or base substrate.

Specific embodiments of the invention will now be described by way of example with reference to the accompanying drawings in which:-
- Fig.1: is a section through a product produced by the method of the invention; and
- Fig.2: is a plan view of a part of another product produced by the invention.

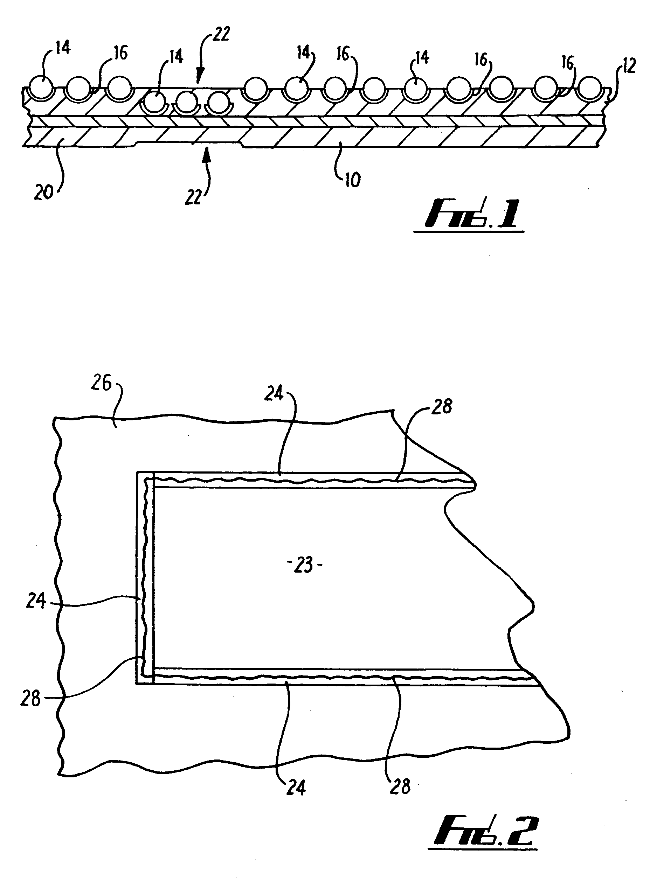

Referring to Fig.1 a retro-reflective assembly comprises a substrate 10, for example of polyvinyl chloride and a binder layer 12 coated onto the substrate. Optical glass beads 14 are partially embedded in the binder layer. The surfaces of the optical glass beads that are embedded in the binder layer are coated with a reflective metal 16.

The assembly is secured to a support 20 by high frequency welding. The site of the weld is indicated in the drawing by reference numeral 22. As can be seen in the drawing the weld has been made at a location where metal coated optical glass beads are present.

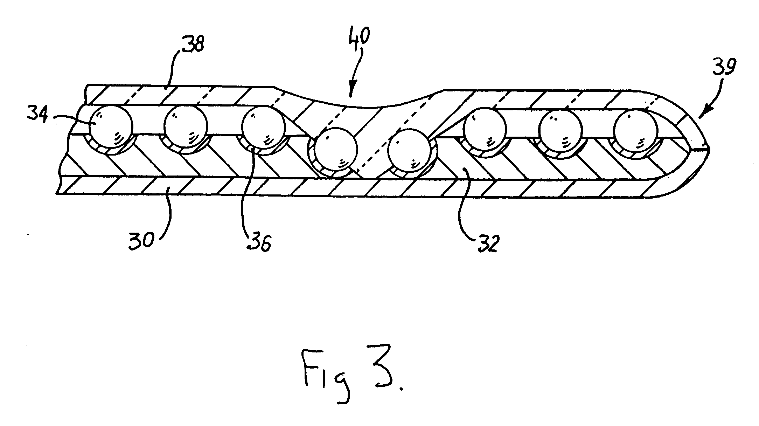

In the embodiment of Fig.1 there is no cover over the optical glass beads. A transparent or translucent cover can be provided over a part or all of the assembly. In the embodiment of Fig.2 a retro-reflective assembly 23 of the kind described with reference to Fig.1 is provided with a strip of transparent or translucent covers 24 for example of polyvinyl chloride at its edges. The assembly is then high frequency welded to a support 26 along the edges of the assembly where the cover is positioned and as indicated by the line referenced 28.

Referring to Fig.3 of the drawing a substrate 30, for example of polyvinyl chloride is coated with a layer 32 of a binder for example of product SP 785 manufactured by E.T.Marler Ltd. Optical glass beads 34 previously coated with metal, for example silver are partially embedded in the binder layer and the metal coating removed from the exposed parts of the beads to leave a coating 36 over the surfaces of the beads that are embedded. A transparent cover 38 of, for example polyvinyl chloride, is laid over the beads and welded to the underlying assembly, as at 39 and 40, by high frequency welding. Weld 39 is an edge weld formed at the same time as the product is cut to the desired shape by the high frequency welding equipment from a larger piece. Weld 40 is a pocket weld.

The invention is not restricted to the above-described embodiments and many variations and modifications can be made. For example the cover and/or substrate do not need to be of polyvinyl chloride provided they are of materials which can be welded together by high frequency welding. The cover and/or the substrate can be rigid or flexible depending upon the intended use of the assembly. The substrate underlying the binder layer may comprise several layers and could include an adhesive layer and a release paper. Similarly the top cover layer may be a composite layer with possibly only the layer immediately adjacent to the optical glass beads being high frequency weldable.

The substrate may itself be the binder layer for example by applying beads to a newly extruded still plastic extrusion or by the used well known transfer techniques for making retro-reflective structures.

The assembly of the invention may also comprise a binder layer which may be adhesive and either continuous or discontinuous.

The substrate, top cover (if present) or binder layer may comprise a layer of material reactive to high frequency radio energy, not confined to, but particularly including the 27 megahertz band. The substrate may be provided with an adhesive backing suitable for joining the completed assembly to another surface. The substrate of the assembly may be reinforced by woven or non-woven textiles.

## Claims

1. A retro-reflective assembly comprising a single or multi-layer substrate (10) and a layer of at least some partially metallised and partially embedded optical glass beads (14) characterised in that the substrate (10) is, at any point, joined to one or more single or multi-layer structures by the use of high frequency welding techniques and at least one partially metallised optical glass bead (14) is encapsulated or captured within the weld area or displaced from its original position as a result of the weld.

2. A retro-reflective assembly as claimed in Claim 1, further characterised in that the substrate includes a binder layer (12).

3. A retro-reflective assembly as claimed in Claim 1 or Claim 2, further characterised in that said structure comprises a top cover (24) and/or a support (26).

4. A retro-reflective assembly as claimed in Claim 3, further characterised in that said top cover/support (26) is joined to a support/top cover by the use of high frequency welding techniques or otherwise.

5. A retro-reflective assembly as claimed in Claim 3, further characterised in that said substrate (10) is provided with an adhesive suitable for joining said substrate to a support or a top cover.

6. A retro-reflective assembly as claimed in any preceding claim, further characterised in that a layer of said substrate (10) and/or a layer of said structure comprises material reactive to high frequency radio energy, not confined to, but particularly including the 27 megahertz band.

7. A retro-reflective assembly as claimed in any preceding claim, further characterised in that said layer of partially metallised beads includes other particles.

8. A retro-reflective assembly as claimed in any preceding claim, further characterised in that said layer of partially metallised beads covers between 5% and 75% of the surface area of said substrate.

9. A retro-reflective assembly as claimed in any preceding claim, further characterised in that said substrate is joined to said structure so as to create one or more cells or pockets.

10. A retro-reflective assembly as claimed in any preceding claim, further characterised in that at the time of welding the substrate (10) and structure together, a tear seal is created around at least part of the periphery of the assembly enabling a resultant smaller shaped assembly to be removed from a larger sheet of the assembly.

11. A retro-reflective assembly as claimed in any preceding claim, further characterised in that said layer of partially metallised and partially embedded beads (14) comprises beads coated with a metal reflective layer (16) partially embedded in the substrate (10) and from which the coating (16) on the exposed parts has been removed.

12. A method of forming a retro-reflective assembly comprising a single or multi-layer substrate (10) and a layer of at least some partially metallised and partially embedded optical glass beads (14) comprising the steps of providing a single or multi-layer substrate (10) including a layer of at least some partially metallised and partially embedded optical glass beads (14) and joining the substrate at any point to one or more single or multi-layer structures characterised in that the substrate (10) is joined at any point to one or more single or multi-layer structures by the use of high frequency welding and at least one partially metallised optical glass bead is encapsulated or captured within the weld area or displaced from its original position as a result of the weld.

13. A method as claimed in claim 12 further characterized by the step of joining the substrate (10) to a top cover (24) and/or support (26) by the use of high frequency welding.

14. A method as claimed in claim 13 further characterized by the step of joining said support (26) to said top cover (24) by the use of high frequency welding.

15. A method as claimed in any of claims 1 to 14 further characterized by the step of joining said substrate (10) to said structure by the use of high frequency welding to form one or more cells or pockets.

16. A method as claimed in any of claims 12 to 15 further characterized in that the layer of partially metallised and partially embedded beads (14) is formed by embedding in the substrate (10) beads, coated overall within a metal reflective layer and then removing the metal coating on the exposed part of the beads.

## Patentansprüche

1. Rückstrahlende Anordnung mit einem ein- oder mehrlagigen Substrat (10) und einer Lage aus zumindest einigen, teilweise metallisierten und teilweise eingebetteten optischen Glaskügelchen (14), dadurch gekennzeichnet, daß das Substrat (10) an beliebiger Stelle mit einer oder mehreren, ein- oder mehrlagigen Strukturen unter Benutzung von Hochfrequenz-Schweißtechniken verbunden ist und daß zumindest ein teilweise metallisiertes optisches Glaskügelchen (14) als Ergebnis der Schweißung innerhalb der Schweißbereiches eingeschlossen oder festgesetzt oder aus seiner ursprünglichen Lage heraus verschoben ist.

2. Rückstrahlende Anordnung wie in Anspruch 1 beansprucht, ferner dadurch gekennzeichnet, daß das Substrat eine Binderschicht (12) beinhaltet.

3. Rückstrahlende Anordnung wie in Anspruch 1 oder Anspruch 2 beansprucht, ferner dadurch gekennzeichnet, daß die genannte Struktur eine Deckschicht (24) und/oder einen Träger (26) aufweist.

4. Rückstrahlende Anordnung wie in Anspruch 3 beansprucht, ferner dadurch gekennzeichnet, daß die/der genannte Deckschicht/Träger (26) zu einem/einer Träger/Deckschicht unter Benutzung von Hochfrequenz-Schweißtechniken oder anderweitig verbunden ist.

5. Rückstrahlende Anordnung wie in Anspruch 3 beansprucht, ferner dadurch gekennzeichnet, daß das genannte Substrat (10) mit einem Klebstoff versehen ist, der dazu geeignet ist, das genannte Substrat mit einem Träger oder einer Deckschicht zu verbinden.

6. Rückstrahlende Anordnung wie in irgendeinem vorausgehenden Anspruch beansprucht, ferner dadurch gekennzeichnet, daß eine Lage des genannten Susbtrates (10) und/oder eine Lage der genannten Struktur ein Material aufweist, das auf Hochfrequenz-Strahlungsenergie reagiert, welche insbesondere das 27 Megahertzband beinhaltet, ohne jedoch auf dieses eingeschränkt zu sein.

7. Rückstrahlende Anordnung wie in irgendeinem vorausgehenden Anspruch beansprucht, ferner dadurch gekennzeichnet, daß die genannte Lage aus teilweise metallisierten Kügelchen weitere Partikel beinhaltet.

8. Rückstrahlende Anordnung wie in irgendeinem vorausgehenden Anspruch beansprucht, ferner dadurch gekennzeichnet, daß die genannte Lage aus teilweise metallisierten Kügelchen zwischen 5% und 750/0 des Oberflächenbereiches des genannten Substrates bedeckt.

9. Rückstrahlende Anordnung wie in irgendeinem vorausgehenden Anspruch beansprucht, ferner dadurch gekennzeichnet, daß das genannte Substrat mit der genannten Struktur so verbunden ist, daß eine oder mehrere Zellen oder Taschen gebildet werden.

10. Rückstrahlende Anordnung wie in irgendeinem vorausgehenden Anspruch beansprucht, ferner dadurch gekennzeichnet, daß zum Zeitpunkt des Verschweißens des Substrates (10) mit der Struktur eine Reißnaht um zumindest einen Teil des Umfanges der Anordnung herum erzeugt wird, um zu ermöglichen, daß eine sich ergebende, kleiner geformte Anordnung von einer größeren Bahn der Anordnung abgelöst werden kann.

11. Rückstrahlende Anordnung wie in irgendeinem vorausgehenden Anspruch beansprucht, ferner dadurch gekennzeichnet, daß die genannte Lage aus teilweise metallisierten und teilweise eingebetteten Kügelchen (14) Kügelchen aufweist, die mit einer reflektierenden metallischen Schicht (16) überzogen sind, die teilweise in dem Substrat (10) eingebettet ist, und von denen die Schicht (16) an den freiliegenden Teilen entfernt ist.

12. Verfahren zur Bildung einer rückstrahlenden Anordnung mit einem ein- oder mehrlagigen Substrat (10) und einer Lage von zumindest einigen, teilweise metallisierten und teilweise eingebetteten optischen Glaskügelchen (14), aufweisend die Schritte des Vorsehens eines ein- oder mehrlagigen Substrates (10) mit einer Lage von zumindest einigen, teilweise metallisierten und teilweise eingebetteten optischen Glaskügelchen (14) und des Verbindens des Substrates an beliebiger Stelle mit einer oder mehreren ein- oder mehrlagigen Strukturen, dadurch gekennzeichnet, daß das Substrat (10) an beliebiger Stelle mit einer oder mehreren, ein- oder mehrlagigen Strukturen mittels Benutzung von Hochfrequenzschweißen verbunden wird und zumindest ein teilweise metallisiertes optisches Glaskügelchen innerhalb des Schweißbereiches eingeschlossen oder festgesetzt oder aus seiner ursprünglichen Lage heraus als Ergebnis der Schweißung verschoben wird.

13. Verfahren wie in Anspruch 12 beansprucht, ferner gekennzeichnet durch den Schritt des Verbindens des Substrates (10) mit einer Deckschicht (24) und/oder einem Träger (26) durch Benutzung von Hochfrequenzschweißen.

14. Verfahren wie in Anspruch 13 beansprucht, außerdem gekennzeichnet durch den Schritt des Verbindens des genannten Trägers (26) mit der genannten Deckschicht (24) durch Benutzung von Hochfrequenzschweißen.

15. Verfahren wie in irgendeinem der Ansprüche 12 bis 14 beansprucht, ferner gekennzeichnet durch den Schritt des Verbindens des genannten Substrates (10) mit der genannten Struktur unter Benutzung von Hochfrequenzschweißen, um eine oder mehrere Zellen oder Taschen zu bilden.

16. Verfahren wie in irgendeinem der Ansprüche 12 bis 15 beansprucht, ferner dadurch gekennzeichnet, daß die Lage der teilweise metallisierten und teilweise eingebetteten Kügelchen (14) gebildet wird, indem in dem Substrat (10) Kügelchen eingebettet werden, die in Gänze mit einer metallischen reflektierenden Beschichtung überzogen sind, und daß sodann die metallische Beschichtung an dem freiliegenden Teil der Kügelchen entfernt wird.

## Revendications

1. Ensemble rétroréfléchissant comprenant un substrat monocouche ou multicouche (10) et une couche d'au moins quelques perles de verre optique partiellement métallisées et partiellement noyées (14), caractérisé par le fait que le substrat (10) est, en tout point, joint à un ou plusieurs éléments monocouches ou multicouches par des techniques de soudage par haute fréquence et au moins une perle de verre optique partiellement métallisée (14) est encapsulée ou emprisonnée dans la zone de soudage ou déplacée de sa position initiale par suite du soudage.

2. Ensemble rétroréfléchissant selon la revendication 1, caractérisé en outre par le fait que le substrat comporte une couche de liant (12).

3. Ensemble rétroréfléchissant selon la revendication 1 ou la revendication 2, caractérisé en outre par le fait que l'élément comprend une couverture supérieure (24) et/ou un support (26).

4. Ensemble rétroréfléchissant selon la revendication 3, caractérisé en outre par le fait que la couverture supérieure/le support (26) est joint à un support/une couche supérieure par des techniques de soudage par haute fréquence ou autrement.

5. Ensemble rétroréfléchissant selon la revendication 3, caractérisé en outre par le fait que le substrat (10) est pourvu d'un adhésif convenant à la jonction du substrat à un support ou à une couverture supérieure.

6. Ensemble rétroréfléchissant selon l'une des revendications précédentes, caractérisé en outre par le fait qu'une couche du substrat (10) et/ou une couche de l'élément comprend une matière réagissant à l'énergie radio haute fréquence, non limitée à la bande des 27 mégahertz, mais contenant particulièrement celle-ci.

7. Ensemble rétroréfléchissant selon l'une des revendications précédentes, caractérisé en outre par le fait que la couche de perles partiellement métallisées contient d'autres particules.

8. Ensemble rétroréfléchissant selon l'une des revendications précédentes, caractérisé en outre par le fait que la couche de perles partiellement métallisées couvre entre 5 % et 75 % de la surface du substrat.

9. Ensemble rétroréfléchissant selon l'une des revendications précédentes, caractérisé en outre par le fait que le substrat est joint à l'élément de façon à créer une ou plusieurs cellules ou poches.

10. Ensemble rétroréfléchissant selon l'une des revendications précédentes, caractérisé en outre par le fait qu'au moment de l'assemblage par soudage du substrat (10) et de l'élément, autour d'au moins une partie de la périphérie de l'ensemble est créé un joint déchirable qui permet d'enlever un ensemble de forme plus petite résultant d'une feuille plus grande de l'ensemble.

11. Ensemble rétroréfléchissant selon l'une des revendications précédentes, caractérisé en outre par le fait que la couche de perles partiellement métallisées et partiellement noyées (14) comprend des perles revêtues d'une couche réfléchissante métallique (16) partiellement noyées dans le substrat (10) et d'où le revêtement (16) a été enlevé sur les parties exposées.

12. Procédé de formation d'un ensemble rétroréfléchissant comprenant un substrat monocouche ou multicouche (10) et une couche d'au moins quelques perles de verte optique partiellement métallisées et partiellement noyées (14), comprenant les opérations de prise d'un substrat monocouche ou multicouche (10) comportant une couche d'au moins quelques perles de verre optique partiellement métallisées et partiellement noyées (14) et de jonction de ce substrat en tout point à un ou plusieurs éléments monocouches ou multicouches, caractérisé par le fait que le substrat (10) est joint en tout point à un ou plusieurs éléments monocouches ou multicouches par soudage par haute fréquence et au moins une perle de verre optique partiellement métallisée est encapsulée ou emprisonnée dans la zone de soudage ou déplacée de sa position initiale par suite du soudage.

13. Procédé selon la revendication 12, caractérisé en outre par l'opération de jonction du substrat (10) à une couverture supérieure (24) et/ou à un support (26) par soudage par haute fréquence.

14. Procédé selon la revendication 13, caractérisé en outre par l'opération de jonction du support (26) à la couverture supérieure (24) par soudage par haute fréquence.

15. Procédé selon l'une des revendications 12 à 14, caractérisé en outre par l'opération de jonction du substrat (10) à l'élément par soudage par haute fréquence pour la formation d'une ou de plusieurs cellules ou poches.

16. Procédé selon l'une des revendications 12 à 15, caractérisé en outre par le fait que la couche de perles partiellement métallisées et partiellement noyées (14) est formée par noyage dans le substrat (10) de perles entièrement revêtues d'une couche réfléchissante métallique et ensuite enlèvement du revêtement métallique sur la partie exposée des perles.
